# DEMANDE DE BREVET EUROPEEN

(11) **EP 1 396 750 A1**
(43) Date de publication de la demande: **10.03.2004**
(21) Numéro de dépôt: 03292169.4
(22) Date de dépôt: 03.09.2003
(51) Int. Cl.: G02C 3/00, G02C 11/00

(54) **Systèmes d'attache destinés à fixer un cordon sur des branches de lunette**

(30) Priorité: 04.09.2002 FR 0210944
(71) Demandeur: Locaplast, 77600 Bussy-Saint-Georges (FR)
(72) Inventeur: Deveney, Jean-Paul, 77340 Pontault-Combault (FR)
(74) Mandataire: Breesé, Pierre

(57) **Abrégé**

La présente invention se rapporte à un système d'attache (1) destiné à fixer une extrémité d'un cordon (2) ou d'une chaînette sur une branche de lunettes, comprenant des moyens de retenue (4) de l'extrémité dudit cordon (2) ou de ladite chaînette et des moyens de fixation (5) à ladite branche des lunettes, caractérisé en ce que lesdits moyens de fixation (5) sont constitués d'au moins un bras (6) semi rigide formant un logement (7) destiné à recevoir ladite branche des lunettes, ledit bras (6) étant disposé de manière à former un espacement (8) permettant l'insertion et le maintien de ladite branche des lunettes.

## Description

La présente invention se rapporte au domaine de la lunetterie, et plus particulièrement à un système d'attache destiné à fixer une extrémité d'un cordon ou d'une chaînette sur une branche de lunettes, ledit système d'attache comprenant des moyens de retenue de l'extrémité dudit cordon ou de ladite chaînette et des moyens de fixation à ladite branche des lunettes.

La présente invention peut s'appliquer à tout type de branches, qu'elles soient fines ou épaisses, ou de forme cylindrique ou plate.

L'art antérieur connaît déjà de tels systèmes d'attache.

Le système d'attache le plus employé consiste en un anneau élastique que l'on glisse sur la branche de la monture et que l'on resserre sur ladite branche au moyen d'une bague cylindrique coulissant sur ledit anneau.

Cependant, ce système d'attache présente l'inconvénient d'offrir une adhésion insuffisante dudit anneau élastique sur ladite branche : la bague cylindrique se desserrant, l'anneau élastique glisse sur ladite branche, obligeant l'utilisateur à repositionner et à resserrer l'anneau.

En outre, un tel système est dépourvu de tout système de sécurité en cas d'accroche involontaire et violente du cordon ou des lunettes avec un élément extérieur, pouvant alors occasionner un endommagement des lunettes lié au choc, voire occasionner des blessures à la personne portant les lunettes.

Il est proposé, dans le certificat d'utilité français FR2746933, un dispositif d'attache de cordon ou de chaînette sur des montures de lunettes.

Le dispositif est constitué de deux vrilles souples constituées d'anneaux ouverts destinés à être enroulés autour de chacune des branches de la monture, lesdites vrilles étant reliées au cordon ou à la chaînette par clipsage ou surmoulage.

Les anneaux ouverts constituant lesdites vrilles se déforment pour s'adapter à la configuration des branches de la monture, les maintenant respectivement de manière adéquate, sans aucun réglage.

Cependant, le dispositif d'attache décrit dans le certificat d'utilité FR2746933 n'offre pas, notamment pour des lunettes munies de branches très fines, une sécurité suffisante en cas d'accroche involontaire et violente du cordon ou desdites lunettes. En effet, la vrille en matériau souple, constituée de plusieurs anneaux ouverts, se déforme concentriquement pour s'adapter aux différentes configurations des branches de lunettes. Ainsi, plus les branches sont fines, plus le diamètre de la vrille est petit et le nombre d'anneaux importants (et inversement pour des branches épaisses). Dans le cas de montures présentant des branches fines, il sera donc nécessaire que l'accrochage avec l'élément extérieur soit particulièrement violent pour permettre le déroulement complet de la vrille, et donc éviter tout risque d'endommagement de la monture ou de blessure occasionnée à la personne portant les lunettes.

En outre, la disposition de plusieurs anneaux autour des branches entre l'oreille et la charnière de la monture, confère un aspect inesthétique des lunettes munies d'un cordon ou d'une chaînette.

La présente invention entend remédier aux inconvénients de l'art antérieur en proposant un système d'attache de cordon ou de chaînette destiné à tout type de branches de lunettes, ledit système d'attache se détachant aisément desdites branches en cas d'accroche violente tout en offrant un bon maintien sur lesdites branches

En outre, la présente invention propose de réaliser un système d'attache discret.

Pour ce faire, la présente invention est du type décrit ci-dessus et elle est remarquable, dans son acception la plus large, en ce que lesdits moyens de fixation sont constitués d'au moins un bras semi rigide formant un logement destiné à recevoir ladite branche des lunettes, ledit bras étant disposé de manière à former un espacement permettant l'insertion et le maintien de ladite branche des lunettes.

Dans un premier mode de réalisation de l'invention, ledit logement formé par lesdits bras est cylindrique.

Dans un second mode de réalisation de l'invention, ledit logement formé par ledit bras constitue une fente.

Avantageusement, lesdits moyens de fixation sont en polymère élastique.

Avantageusement, ledit système d'attache présente une cavité dans laquelle est logée l'extrémité dudit cordon ou de ladite chaînette.

La présente invention se rapporte également à un cordon ou une chaînette pour lunettes présentant deux extrémités, une extrémité au moins et de préférence les deux extrémités étant munie(s) d'un système d'attache précédemment décrit.

Selon un premier mode de réalisation de l'invention, ledit système d'attache est moulé sur l'extrémité dudit cordon ou de ladite chaînette.

Selon un second mode de réalisation de l'invention, ledit système d'attache est fixé à l'extrémité dudit cordon par collage.

Selon un troisième mode de réalisation de l'invention, l'extrémité dudit cordon ou de ladite chaînette est retenue dans une cavité dudit système d'attache au moyen d'un arrêtoir.

On comprendra mieux l'invention à l'aide de la description, faite ci-après à titre purement explicatif, de deux modes de réalisation de l'invention, en référence aux figures annexées :
- la figure 1 illustre une vue en perspective d'une extrémité d'un cordon muni d'un système d'attache selon un premier mode de réalisation de l 'invention ;
- la figure 2 illustre une vue en coupe longitudinale de l'extrémité du cordon munie du système d'attache selon l'invention selon l'axe AA₁ de la figure 1 ;
- la figure 3 illustre une vue en coupe transversale du système d'attache selon l'invention selon l'axe BB₁ de la figure 1.
- La figure 4 illustre une vue en perspective d'une extrémité d'un cordon muni d'un système d'attache selon un second mode de réalisation de l'invention.

La présente invention concerne un système d'attache (1) destiné à fixer une extrémité d'un cordon (2) sur l'une des branches d'une monture de lunettes.

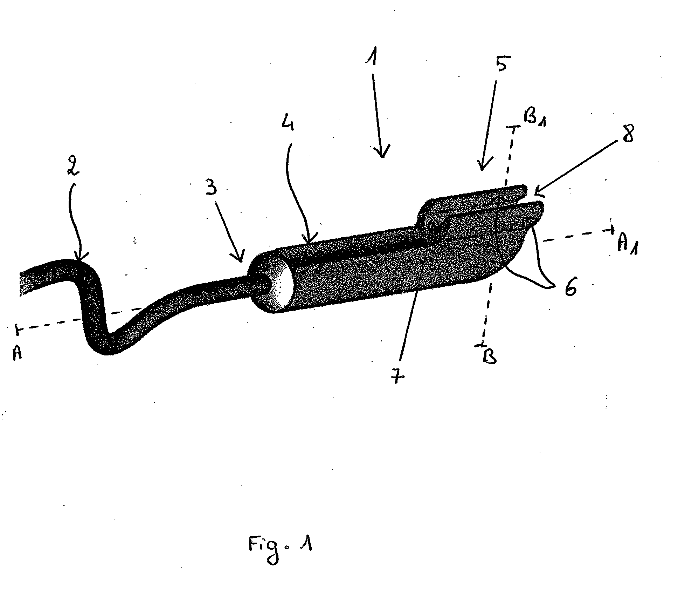

La figure 1 illustre un cordon (2) présentant une extrémité munie d'un système d'attache (1) selon l'invention destiné à des lunettes munies de branches de type cylindrique.

Ledit système d'attache (1) comporte des moyens de retenue (4) destinés à permettre la retenue de l'extrémité dudit cordon (2) et des moyens de fixation (5) à ladite branche de ladite monture.

Lesdits moyens de fixation (5) sont constitués de deux bras (6) configurés de manière à former un logement (7) cylindrique, ledit logement (7) étant destiné à recevoir ladite branche de la monture.

Lesdits bras (6) sont réalisés dans un matériau semi-rigide présentant des propriétés de déformation et de résilience.

Avantageusement, lesdits bras (6) sont en polymère élastique, du type caoutchouc.

Lesdits bras (6) sont en outre disposés l'un par rapport à l'autre de manière à former un espacement (8) configuré pour permettre l'insertion de ladite branche dans ledit logement (7) formé par lesdits bras (6), tout en assurant le maintien desdites branches une fois insérées dans ledit logement (7).

L'insertion de ladite branche dans ledit logement (7) est réalisée par l'exercice d'une pression sur ladite branche disposée au niveau dudit espacement (8).

Ainsi, du fait de leur propriété de déformation, lesdits bras (6) s'écarte lors du passage de ladite branche au niveau dudit espacement (8), pour se resserrer sur ladite branche une fois l'insertion effectuée dans ledit logement (7).

De façon inverse, en cas d'accroche violente et involontaire de la monture, ladite branche est extraite dudit logement formé par lesdits bras, lesdits bras s'écartant sous l'impact de l'accroche.

Comme l'illustre la figure 1, lesdits moyens de fixation (5) sont supportés par lesdits moyens de retenue (4).

Dans ce mode de réalisation, lesdits moyens de fixation (5) sont formés de manière à former un cylindre creux présentant une ouverture longitudinale et s'étendant sur une partie desdits moyens de retenue (4).

Il est bien entendu évident que les moyens de fixation (5) peuvent, si cela est nécessaire, présenter des formes autres qu'une forme semi-cylindrique.

De plus, selon une variante de l'invention, lesdits moyens de fixation (5) s'étendent sur toute la longueur desdits moyens de retenue (4).

Dans une autre variante de l'invention, lesdits moyens de retenue (4) pourront supporter une série de moyens de fixation (5).

Avantageusement, ledit système d'attache (1), comprenant lesdits moyens de retenue (4) et les moyens de fixation (5), est réalisé en polymère élastique, de préférence en caoutchouc.

La retenue dudit cordon (2) par ledit système d'attache (1), illustré sur la figure 1, est réalisée par surmoulage dudit système d'attache (1) sur l'extrémité dudit cordon (2).

Dans un second exemple de réalisation de l'invention, le raccordement pourra s'effectuer par collage de l'extrémité dudit cordon (2) audit système d'attache (1).

Dans un troisième exemple de réalisation de l'invention, ledit système d'attache (1) comporte une cavité présentant deux ouvertures. L'extrémité dudit cordon est insérée par l'une desdites ouvertures pour être logée dans la cavité dudit système d'attache. Ledit cordon est alors retenu dans ladite cavité au moyen d'un arrêtoir de dimension supérieure audit cordon disposé au niveau de la seconde ouverture.

Ledit arrêtoir pourra par exemple consister en un noeud à l'extrémité dudit cordon.

Dans le cas d'une chaînette, ledit arrêtoir pourra consister en un point de soudure ou un point de colle de manière à former une protubérance présentant un diamètre légèrement supérieur au diamètre dudit logement (7).

Dans un autre mode de réalisation (non représenté) de fixation dudit cordon (2) ou de ladite chaînette sur ledit système d'attache (1), ledit système d'attache (1) comporte à l'une de ses extrémités une partie formant une tige plate creuse sur laquelle l'extrémité dudit cordon (2) ou un maillon de ladite chaînette est sertie.

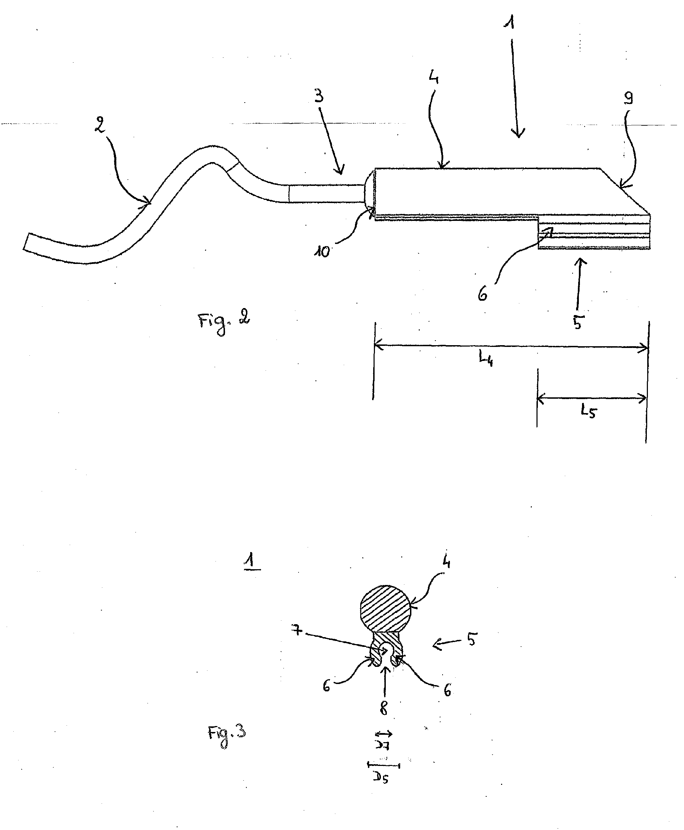

La figure 2 illustre une vue en coupe de l'extrémité dudit cordon (2) munie dudit système d'attache (1) selon l'invention, selon l'axe AA₁ de la figure 1.

Lesdits moyens de retenue (4) présentent une base circulaire distale (9) se situant dans un plan incliné par rapport au plan dans lequel se situe la base circulaire proximale (10).

Avantageusement, lesdits moyens de retenue (4) présentent une longueur L₄ variant de 16 millimètres à 20 millimètres.

Avantageusement, lesdits moyens de fixation (5) présentent une longueur L₅ de 8 millimètres.

Bien entendu, les présentes dimensions sont données à titre d'exemple, ledit système d'attache (1) selon l'invention ne se limitant pas à cette seule configuration.

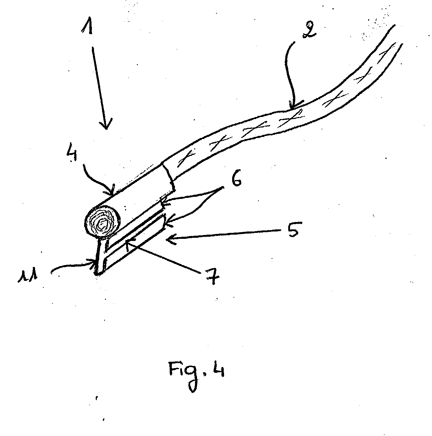

La figure 3 illustre une vue en coupe du système d'attache (1) selon l'invention selon l'axe BB₁ de la figure 1.

Avantageusement, lesdits moyens de fixation (5), constitués par lesdits bras (6), ledit logement (7) et ledit espacement (8), présentent un diamètre D₅ de 2,5 millimètres.

Avantageusement, ledit logement (7) constitué par lesdits bras (6) présente un diamètre D₇ compris entre 1 millimètre et 1,5 millimètre, et de préférence de 1,25 millimètre.

Avantageusement, lesdits bras (6) sont disposés l'un par rapport à l'autre de manière à former un espacement (8) de l'ordre de 0,5 millimètre à 0,75 millimètre.

Avantageusement, lesdits moyens de retenue (4) présentent un diamètre D₄ compris entre 3,5 millimètres et 4 millimètres, et de préférence 3,8 millimètres.

Bien entendu, les côtes desdits moyens de retenus (4) et desdits moyens de fixation (5) constituant ledit système d'attache (1) sont données à titre d'exemple. En particulier, le mode de réalisation de l'invention décrit ci-dessus présente un système d'attache (1) de cordon destiné à des montures munies de branches très fines. Il est évident que les côtes dudit système d'attache (1) seront modifiées et adaptées à la taille des montures ainsi qu'à l'épaisseur et la forme desdites branches constituant lesdites montures.

La figure 4 illustre un cordon (2) présentant une extrémité munie d'un système d'attache (1) selon l'invention destiné à des lunettes munies de branches plates.

Dans ce mode de réalisation, ledit système d'attache (1) comporte des moyens de fixation (5) constitués de deux bras (6) formant un logement (7) constituant une fente.

Ledit système d'attache (1) est alors accroché à la branche desdites lunettes par l'insertion et l'enfoncement de ladite branche jusqu'à un élément formant buté (11) constituant lesdits moyens de fixation (5).

Dans les deux modes de réalisation précédemment décrits, ledit système d'attache (1) présente des moyens de fixation (5) constitués de deux bras (6). Il est évident que ledit système d'attache pourra comporter un seul bras ou une série de un ou deux bras disposés symétriquement l'un par rapport à l'autre.

L'invention est décrite dans ce qui précède à titre d'exemple. Il est entendu que l'homme du métier est à même de réaliser différentes variantes de l'invention sans pour autant sortir du cadre du brevet.

## Revendications

1. Système d'attache (1) destiné à fixer une extrémité d'un cordon (2) ou d'une chaînette sur une branche de lunettes, comprenant des moyens de retenue (4) de l'extrémité dudit cordon (2) ou de ladite chaînette et des moyens de fixation (5) à ladite branche des lunettes, **caractérisé en ce que** lesdits moyens de fixation (5) sont constitués d'au moins un bras (6) semi rigide formant un logement (7) destiné à recevoir ladite branche des lunettes, ledit bras (6) étant disposé de manière à former un espacement (8) permettant l'insertion et le maintien de ladite branche des lunettes.

2. Système d'attache selon la revendication 1, **caractérisé en ce que** ledit logement (7) formé par ledit bras (6) est cylindrique.

3. Système d'attache selon la revendication 1, **caractérisé en ce que** ledit logement (7) formé par ledit bras (6) constitue une fente.

4. Système d'attache selon l'une quelconque des revendications 1 à 3, **caractérisé en ce que** lesdits moyens de fixation (5) sont en polymère élastique.

5. Système d'attache selon l'une quelconque des revendications 1 à 4, **caractérisé en ce que** ledit système d'attache (1) présente une cavité dans laquelle est logée l'extrémité dudit cordon (2) ou de ladite chaînette.

6. Cordon (2) ou chaînette pour lunettes présentant deux extrémités, une extrémité au moins et de préférence les deux extrémités étant munie(s) respectivement d'un système d'attache (1) selon l'une quelconque des revendications précédentes.

7. Cordon (2) ou chaînette pour lunettes selon la revendication 6, **caractérisé en ce que** ledit système d'attache (1) est moulé sur l'extrémité dudit cordon (2) ou de ladite chaînette.

8. Cordon (2) ou chaînette pour lunettes selon la revendication 6, **caractérisé en ce que** ledit système d'attache (1) est fixé à l'extrémité dudit cordon (2) ou de ladite chaînette par collage.

9. Cordon (2) ou chaînette pour lunettes selon la revendication 6, **caractérisé en ce que** l'extrémité dudit cordon (2) ou de ladite chaînette est retenue dans une cavité dudit système d'attache (1) au moyen d'un arrêtoir.
